# FASCICULE DE BREVET EUROPEEN

(11) **EP 2 920 986 B1**
(45) Date de publication et mention de la délivrance du brevet: **01.01.2020**
(21) Numéro de dépôt: 13801663.9
(22) Date de dépôt: 14.11.2013
(51) Int. Cl.: H04W 4/00, H04W 88/02

(54) **DISPOSITIF NFC COMPRENANT DES MOYENS DE NOTIFICATION CONFIGURABLES**
NFC-VORRICHTUNG MIT KONFIGURIERBAREN BENACHRICHTIGUNGSMITTELN
NFC DEVICE COMPRISING CONFIGURABLE NOTIFICATION MEANS

(30) Priorité: 14.11.2012 FR 1260850
(43) Date de publication de la demande: 23.09.2015
(73) Titulaire: VERIMATRIX, 13590 Meyreuil (FR)
(72) Inventeur: LERCH, Matthias, F-13240 Septemes Les Vallons (FR); FERROUL, Remy, F-13530 Trets (FR)
(74) Mandataire: Marchand, André
(86) Numéro de dépôt international: PCT/FR2013/052742
(87) Numéro de publication internationale: WO 2014/076427

(56) Documents cités:
- US-A1- 2009 247 077
- US-A1- 2010 227 553
- US-A1- 2011 010 755

## Description

L'invention est définie par les revendications. La présente invention concerne un dispositif de communication à champ proche conçu pour établir un canal de communication à champ proche avec un dispositif externe, et fournir à un premier processeur hôte du dispositif des données d'application émises par le dispositif externe.

Les techniques de communication à champ proche, dites NFC ("Near Field Communication"), permettent à deux dispositifs comportant chacun une bobine d'antenne d'échanger des données par couplage inductif. La création d'un canal de communication NFC nécessite que l'un des deux dispositifs, appelé "lecteur", émette un champ magnétique, et que l'autre dispositif, appelé "carte", ait sa bobine d'antenne suffisamment proche de celle du premier dispositif pour que le champ magnétique génère dans celle-ci un signal d'antenne. Dans un autre procédé connu de communication NFC, appelé "peer-to-peer" (point à point), chaque dispositif émet tour à tour le champ magnétique. Ces dernières années, on a donc développé des dispositifs NFC prévu pour être connectés à des processeurs hôtes et offrir à ces derniers la possibilité d'exécuter des applications NFC en mode lecteur ("reader"), émulation de carte ("card émulation") ou point à point ("Peer to Peer").

Le document D1 US 20100227553 A1 décrit un contrôleur NFCC qui fournit à un second processeur une copie des données d'application échangées entre le dispositif à champ proche externe et un premier processeur, basé sur une table de routage.

La figure 1 représente schématiquement la structure d'un dispositif NFC classique D1 du type précité. Le dispositif comprend un circuit d'interface de communication sans contact CLF ("Contactless Front End"), un contrôleur NFC désigné NFCC1, une mémoire MEM1 de programme et de données, des ports de communication P1, P2, ces éléments étant reliés par un bus BS. Les ports P1, P2 permettent de connecter des processeurs hôtes HP1, HP2 au dispositif D1. La mémoire MEM1 reçoit un système d'exploitation OS du processeur NFCC1 et un programme de routage RPGR exécuté par le processeur NFCC1. Le circuit d'interface CLF est équipé d'une bobine d'antenne AC1 et est configuré pour établir un canal de communication NFC avec un dispositif externe EDV comprenant lui-même une bobine d'antenne AC2.

Un tel dispositif de communication à champ proche a été décrit dans les brevets ou demandes de brevet EP 1 327 222, EP 1 758 049, EP 1 855 229, et EP 1 855 389. EP 1 327 222 enseigne la prévision du mode émulation de carte. EP 1 855 229 décrit un procédé pour alimenter électriquement le dispositif à partir du champ magnétique reçu lorsque celui-ci est dans le mode émulation de carte. EP 1 855 389 décrit un procédé de routage de données entrantes (données reçues par le circuit d'interface CLF) permettant de déterminer à quel processeur hôte les données sont destinées. EP 1 327 222 décrit un procédé de routage utilisant une table de routage. Par ailleurs, des normes ou spécifications définissent plus précisément certaines caractéristiques du dispositif, telle que la norme ETSI TS 102 622 ("Smart Cards; UICC - Contactless Front-end (CLF) Interface; Host Controller Interface (HCI)"), la norme ETSI TS 102 613 qui définit le fonctionnement du circuit d'interface CLF, ou les spécifications NCI ("NFC Controller Interface").

On suppose ici que le processeur hôte HP1 est un composant sécurisé dédié à des applications nécessitant un certain niveau de sécurité, notamment des applications payantes ou impliquant directement ou indirectement un paiement, et que le processeur HP2 est un processeur non sécurisé ayant accès à des moyens de communication avec un utilisateur. Le processeur HP1 est par exemple une carte de type UICC (Universal Integrated Circuit Card) équipée d'une fonctionnalité NFC ou plus généralement un processeur de type "Secure Element" (processeur sécurisé dédié aux applications NFC). Le processeur HP2 est par exemple le processeur en bande de base d'un téléphone mobile, et assure également le contrôle de divers périphériques d'interface homme/machine, comme un afficheur et des moyens de saisie (clavier réel ou virtuel) .

La figure 1 représente également un exemple d'application dans lequel le dispositif D1 opère dans le mode émulation de carte pour le compte du processeur hôte HP1, afin de permettre à ce dernier d'exécuter une transaction avec le dispositif externe EDV, par exemple un point de vente ("Point Of Sale"). Au cours de la transaction, le processeur hôte HP1 et le dispositif externe EDV échangent des données d'application, par exemple des données APDU ("Application Protocol Data Unit") du type décrit par la norme ISO 7816. Plus particulièrement, le dispositif externe envoie des commandes CAPDU (désignées C-APDU dans la norme) et le processeur hôte HP1 renvoie des réponses RAPDU (désignées RAPDU dans la norme). Ces données transitent par le dispositif D1, et le contrôleur assure leur routage du circuit d'interface CLF vers le processeur hôte HP1 ou inversement.

Lorsque la transaction est terminée, le processeur hôte HP1 peut fournir au processeur HP2 des informations sur la transaction. Le processeur HP2 peut alors présenter ces informations à l'utilisateur. Par exemple, le processeur HP2 peut afficher une confirmation qu'une transaction "achat du produit X" a été exécutée à la date Y pour un montant Z, éventuellement assortie d'un signal sonore.

Par ailleurs, la norme ETSI TS 102 613 (version V9.2.0) définit, dans son paragraphe 11.2, un procédé permettant à deux processeurs hôtes d'échanger des informations sur une transaction. Ce procédé définit une porte de connectivité "Connectivity gate", une commande "PRO_HOST_REQUEST", et des événements EVT_CONNECTIVITY, EVT_OPERATION_ENDED, EVT_TRANSACTION. Ce dernier événement est conformé de la manière indiquée ci-après et comprend l'identifiant "AID" ("Application ID") de l'application concernée.

| Description | Code | Longueur en octets |
|---|---|---|
| AID | '81' | 5 to 16 |
| PARAMÈTRES | '82' | 0 to 255 |

Cette communication d'information sur le déroulement d'une transaction dépend de la configuration du programme application exécuté par le processeur HP1, ou du programme qui active une application au moyen de la fonction de connectivité susmentionnée. La communication à un tiers processeur d'information relative à une transaction nécessite donc de prévoir des lignes de programme spécifiques lors de la conception d'un programme application.

Il pourrait ainsi être souhaité de prévoir un procédé de communication d'information relatives à une transaction qui ne dépende pas du programme application exécuté par le processeur hôte, et qui puisse être géré et configuré de manière centralisée pour toutes applications, tout en tenant compte du fait que l'information à communiquer peut être différente d'une application à l'autre.

Ainsi, des modes de réalisation de l'invention concernent un dispositif de communication à champ proche configuré pour établir un canal de communication à champ proche avec un dispositif externe, et fournir à un premier processeur hôte des données d'application émises par le dispositif externe, fournir à un second processeur hôte des notifications relatives à la nature ou au contenu de données d'application fournies au premier processeur hôte, et configurer les notifications en fonction d'un paramètre caractéristique d'une application dans le cadre de laquelle le dispositif externe envoie des données au premier processeur hôte.

Selon un mode de réalisation le dispositif est conçu pour configurer les notifications en fonction d'au moins l'un des paramètres caractéristiques suivants : un identifiant de l'application dans le cadre de laquelle le dispositif externe envoie des données au premier processeur hôte; une technologie au moyen de laquelle le canal de communication à champ proche est formé; ou un protocole de communication au moyen duquel le canal de communication à champ proche est formé.

Selon un mode de réalisation, le dispositif est conçu pour fournir au second processeur hôte des notifications comprenant des données présentes dans des données d'application, ou une information sur des données présentes dans les données d'application.

Selon un mode de réalisation, le dispositif est configuré pour fournir au second processeur hôte une notification contenant l'identifiant de l'application dans le cadre de laquelle le dispositif externe envoie des données au premier processeur hôte.

Selon un mode de réalisation, le dispositif est configuré pour : identifier une donnée d'application émise par le dispositif externe, sélectionner un programme d'analyse de donnée en fonction du résultat de l'identification de la donnée et du paramètre caractéristique de l'application, analyser la donnée d'application au moyen du programme d'analyse sélectionné, et configurer une notification en fonction du résultat de l'analyse de la donnée.

Selon un mode de réalisation, le dispositif est configuré pour identifier la donnée d'application au moyen d'une série de masques d'identification, en comparant chaque masque avec la donnée d'application jusqu'à trouver un masque correspondant à la donnée.

Selon un mode de réalisation, le dispositif est configuré pour analyser la donnée d'application en combinant la donnée d'application avec un masque de données formant ou inclus dans le programme d'analyse sélectionné.

Selon un mode de réalisation, les données d'application sont des commandes CAPDU au sens de la norme ISO 7816.

Selon un mode de réalisation, le dispositif est configuré pour : fournir au dispositif externe des données d'application émises par le premier processeur hôte, fournir au second processeur hôte des notifications relatives à la nature ou au contenu des données d'application émises par le premier processeur hôte, et configurer les notifications en fonction dudit paramètre caractéristique.

Des modes de réalisation de l'invention concernent également un procédé de communication à champ proche, comprenant des étapes consistant à : établir un canal de communication à champ proche entre un dispositif externe et un dispositif de communication à champ proche, fournir à un premier processeur hôte du dispositif de communication à champ proche, des données d'application émises par le dispositif externe, fournir à un second processeur hôte du dispositif communication à champ proche, des notifications relatives à la nature ou au contenu des données d'application fournies au premier processeur hôte, et configurer les notifications en fonction d'un paramètre caractéristique d'une application dans le cadre de laquelle le dispositif externe envoie des données au premier processeur hôte.

Selon un mode de réalisation, les notifications sont configurées en fonction d'au moins l'un des paramètres caractéristiques suivants : un identifiant de l'application dans le cadre de laquelle le dispositif externe envoie des données au premier processeur hôte, une technologie de communication sans contact au moyen de laquelle le canal de communication à champ proche est formé, ou un protocole de communication sans contact au moyen duquel le canal de communication à champ proche est formé.

Selon un mode de réalisation, les notifications fournies au second processeur hôte comprennent des données présentes dans des données d'application, ou une information sur des données présentes dans les données d'application.

Selon un mode de réalisation, le procédé comprend une étape consistant à fournir au second processeur hôte une notification contenant l'identifiant de l'application dans le cadre de laquelle le dispositif externe envoie des données au premier processeur hôte, sur réception d'une commande de sélection d'application émise par le dispositif externe et fournie au premier processeur hôte.

Selon un mode de réalisation, le procédé comprend les étapes consistant à : identifier une donnée d'application émise par le dispositif externe, sélectionner un programme d'analyse de donnée en fonction du résultat de l'identification de la donnée et du paramètre caractéristique de l'application, analyser la donnée d'application au moyen du programme d'analyse sélectionné, et configurer une notification en fonction du résultat de l'analyse de la donnée.

Selon un mode de réalisation, le procédé comprend l'utilisation d'une table de routage et de notification désignant le premier processeur hôte et le second processeur hôte en fonction d'au moins un paramètre caractéristique de l'application.

Des modes de réalisation de l'invention seront décrits dans ce qui suit à titre non limitatif, en relation avec les figures jointes, parmi lesquelles :
- la figure 1 précédemment décrite montre schématiquement la structure matérielle et logicielle d'un dispositif NFC classique,
- la figure 2 montre schématiquement la structure matérielle et logicielle d'un mode de réalisation d'un dispositif NFC selon l'invention,
- la figure 3 montre un mode de réalisation de modules de configuration de notification selon l'invention,
- les figures 4A, 4B décrivent des étapes d'un procédé de notification utilisant les modules de la figure 3,
- la figure 5 montre un autre mode de réalisation de modules de configuration de notification selon l'invention et un mode de réalisation d'une table de notification selon l'invention,
- les figures 6A, 6B décrivent des étapes d'un mode de réalisation d'un procédé de notification utilisant les modules de la figure 5,
- la figure 7 montre un autre mode de réalisation de modules de configuration de notification selon l'invention,
- la figure 8 montre un autre mode de réalisation d'une table de notification selon l'invention, et
- la figure 9 montre un mode de réalisation d'une table de routage et de notification selon l'invention.

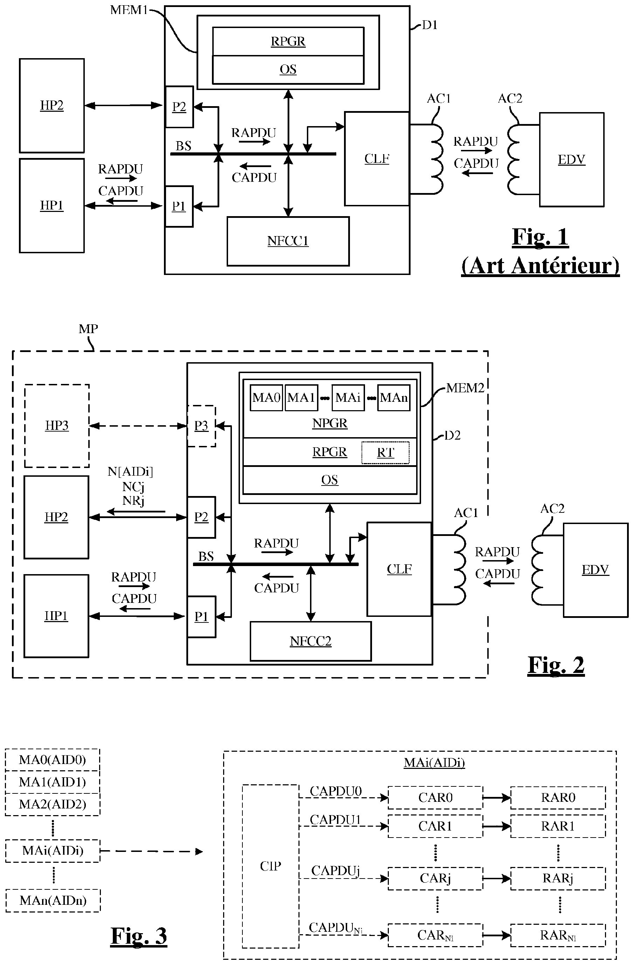

La figure 2 représente schématiquement la structure d'un dispositif NFC selon l'invention, désigné D2. Le dispositif D2 présente la même structure générale que le dispositif D1 précédemment décrit, et comprend ainsi un circuit d'interface de communication sans contact CLF ("Contactless Front End"), un contrôleur NFC "NFCC2", une mémoire de programme et de données MEM2, des ports de communication P1, P2, ces éléments étant reliés par un bus BS. Les ports P1, P2 permettent de connecter des processeurs hôtes HP1, HP2 au dispositif D2. La mémoire MEM2 reçoit un système d'exploitation OS, un programme de routage RPGR pouvant inclure une table de routage RT, et un programme de notification NPGR selon l'invention. Le circuit d'interface CLF est équipé d'une bobine d'antenne AC1 et est configuré pour établir un canal de communication à champ proche avec un dispositif externe EDV comprenant lui-même une bobine d'antenne AC2. Le dispositif D2 et les processeurs hôtes HP1 HP2 peuvent être agencés dans un dispositif portable MP comme un téléphone mobile.

Lorsque le processeur hôte HP1 et le dispositif externe EDV réalisent une transaction, le contrôleur NFCC2 exécute le programme de routage RPGR et transfère au processeur hôte HP1 des commandes CAPDU émises par le dispositif externe EDV et reçues par le circuit d'interface CLF, ou transfère au circuit d'interface CLF des réponses RAPDU émises par le processeur HP1, afin qu'elles soient envoyées au dispositif externe EDV. Le contrôleur exécute également le programme de notification NPGR selon l'invention, et envoie au processeur HP2 des notifications relatives à la nature et/ou au contenu des données CAPDU, RAPDU échangées par le processeur HP1 et le dispositif externe EDV.

Dans un mode de réalisation, le contrôleur envoie au processeur HP2 les notifications suivantes :
- N[AIDi] : notification de sélection d'application contenant un identifiant d'application AIDi présent dans une commande de sélection d'application SELECT_AID transférée au processeur HP1,
- NCj : notification concernant une commande CAPDUj reçue par le circuit d'interface CLF et transférée au processeur HP1,
- NRj : notification concernant une commande RAPDUj émise par le processeur HP1 et transférée au circuit d'interface CLF.

Une notification NCj, NRj se rapportant à une commande ou une réponse peut comprendre tout type d'information ou de donnée, par exemple :
- une information sur la nature de la commande ou de la réponse (par exemple de quel type de commande il s'agit),
- une information sur le contenu de la commande ou de la réponse (par exemple le fait que telle ou telle donnée soit présente dans la commande ou la réponse), et/ou
- une ou plusieurs données contenues dans la commande ou la réponse.

Les notifications NCj ou NRj sont élaborées en fonction d'un paramètre caractéristique de l'application dans le cadre de laquelle le dispositif externe EDV et le processeur hôte HP1 échangent les données APDU. Dans des modes de réalisation décrits dans ce qui suit, ce paramètre caractéristique est l'identifiant AID de l'application.

A cet effet, le programme de notification NPGR comporte un ensemble de modules de configuration de notification MAi (MA0, MA1,...MAn), chaque module MAi étant associé à un identifiant AIDi. La structure des modules MAi est représentée schématiquement sur la figure 3. Chaque module comporte :
- un programme CIP d'identification de commande,
- un ensemble de règles d'analyse de commande (CAR0, CAR1, ... CAR_{Ni}) se rapportant à des commandes CAPDUj (CAPDU0, CAPDU1, ... CAPDU_{Ni}) que le programme CIP peut permettre d'identifier, et
- un ensemble de règles d'analyse de réponse RARj (RAR0, RAR1, ...RAR_{Ni}) se rapportant à des réponses RAPDUj (RAPDU0, RAPDU1,... RAPDU_{Ni}) que le programme CIP peut permettre d'identifier.

Chaque règle d'analyse de réponse RARj est associée à une règle d'analyse de commande CARj, et chaque règle d'analyse de commande CARj est associée à une commande CAPDUj pouvant être identifiée au moyen du programme CIP. Chaque règle CARj permet au contrôleur NFCC2 de générer une notification NCj communiquée au processeur HP2. De même, chaque règle RARj permet au contrôleur de générer une notification NRj communiquée au processeur HP2.

Ainsi, la même commande CAPDUj ou la même réponse RAPDUj peut faire l'objet de notifications NCj, NRj différentes en fonction de l'application dans le cadre de laquelle elle est émise, du fait que les règles CARj, RARj au moyen desquelles les notifications sont générées peuvent être différentes.

Par ailleurs, le programme d'identification CIP associé à une application n'est pas nécessairement conçu pour identifier toute commande et toute réponse que l'application est susceptible d'utiliser. Seules les commandes ou réponses pour lesquelles une notification est souhaitée peuvent être prises en considération lors de la conception du programme CIP. Egalement, une commande peut faire l'objet d'une notification NCj sans que la réponse correspondante fasse elle-même l'objet d'une notification NRj, ou vice-versa.

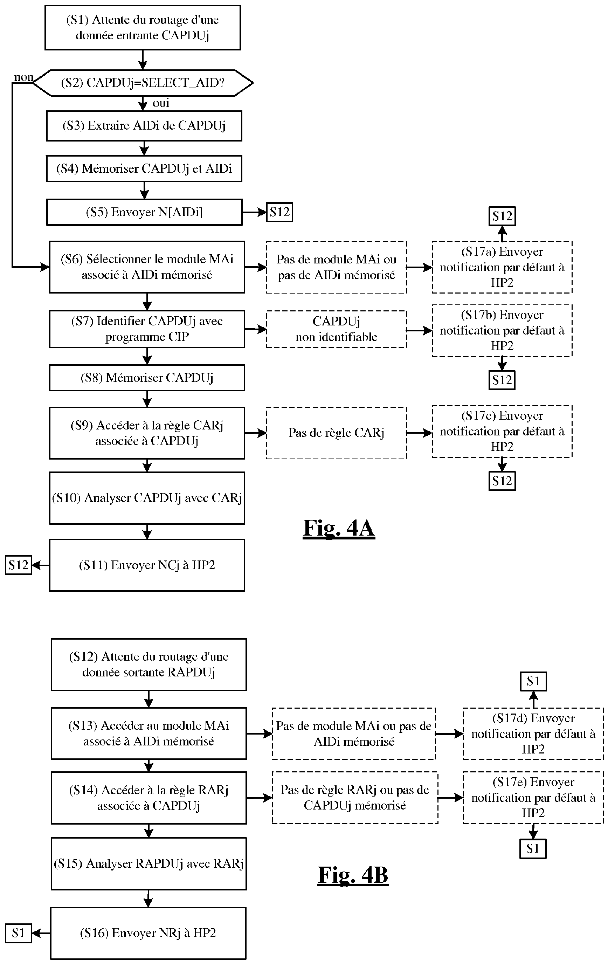

Les figures 4A, 4B décrivent un mode de réalisation d'un procédé de notification selon l'invention, mis en œuvre au moyen du programme de notification NPGR. On suppose ici que le processeur HP1 opère en mode émulation de carte, de sorte que les données d'application entrantes (données émises par le dispositif externe EDV et reçues par le circuit d'interface CLF) sont des commandes CAPDU et les données d'application sortantes (données émises par le processeur hôte HP1) sont des réponses RAPDU.

En référence à la figure 4A, le procédé comprend une étape initiale S1 d'attente du routage d'une donnée entrante CAPDUj reçue par le circuit d'interface CLF. Lorsque cette donnée est routée au processeur HP1 par le programme de routage RPGR, le contrôleur NFCC2 va à une étape S2 où il détermine si la commande CAPDUj est une commande de sélection d'application "SELECT_AID" ou non. Si la réponse est positive, le contrôleur va à une étape S3, sinon le contrôleur va à une étape S6.

A l'étape S3, le contrôleur extrait l'identifiant AIDi de la commande CAPDUj. Au cours d'une étape S4, le contrôleur mémorise la commande CAPDUj en tant que commande courante et l'identifiant AIDi en tant qu'identifiant courant. Au cours d'une étape S5, le contrôleur envoie au processeur HP2 une notification N[AIDi] contenant l'identifiant AIDi, puis va à une étape S12.

L'étape S6 est exécutée après l'étape S2 lorsque la donnée entrante CAPDUj n'est pas une commande de sélection d'application. Un identifiant AIDi est supposé avoir été mémorisé en tant qu'identifiant courant au cours d'une étape S4 précédente, car la commande SELECT _AID constitue la première commande envoyée par le dispositif externe EDV au commencement d'une application. Ainsi, à l'étape S6, le contrôleur sélectionne le module de configuration de notification MAi associé à l'identifiant courant AIDi, parmi l'ensemble des modules MA0 à MAn. Au cours d'une étape S7, le contrôleur identifie la commande CAPDUj au moyen du programme CIP présent dans le module MAi, et mémorise la commande en tant que commande courante à une étape S8. A une étape S9, le contrôleur accède à la règle d'analyse CARj présente dans le module MAi. A une étape S10, le processeur analyse la commande CAPDUj avec la règle CARj et génère une notification NCj, qu'il envoie au processeur hôte HP2 à une étape S11, puis va à l'étape S12.

Il sera noté que l'étape S4 de mémorisation de l'identifiant AIDi en tant qu'identifiant courant, peut consister à mémoriser le rang "i" de l'identifiant dans une liste d'identifiants et à utiliser un index associant à chaque rang i un module de configuration de notification MAi. De même, l'étape S8 de mémorisation de la commande CAPDUj en tant que commande courante, peut consister à mémoriser le rang j de la commande dans une liste de commandes CAPDU0 à CAPDU_{Ni} (liste des commandes que le programme CIP du module MAi permet d'identifier), le paramètre j permettant de retrouver les règles d'analyse CARj, RARj applicables à la commande CAPDUj.

A l'étape S12, figure 4B, le contrôleur attend qu'une donnée sortante RAPDUj émise par le processeur hôte HP1 soit routée par le programme de routage RPGR jusqu'au circuit d'interface CLF. Cette donnée est supposée être la réponse RAPDUj à la commande courante CAPDUj. Lorsque la donnée sortante est routée, le contrôleur accède au module MAi associé à l'identifiant courant AIDi au cours d'une étape S13, puis accède à la règle d'analyse de réponse RARj associée à la commande courante CAPDUj au cours d'une étape S14. A une étape S15, le contrôleur analyse la réponse RAPDUj avec la règle RARj et élabore une notification NRj, qu'il envoie au processeur hôte HP2 à une étape S16. Le contrôleur retourne ensuite à l'étape S1 dans l'attente qu'une nouvelle commande soit routée au processeur HP1.

Le procédé qui vient d'être décrit peut comporter des exceptions empêchant le processeur NFCC2 de réaliser certaines étapes. Dans ce cas, il peut être prévu que des notifications par défaut soient émises. Par exemple, s'il apparaît à l'étape S6 qu'aucun identifiant courant AIDi n'a été précédemment mémorisé, ou qu'il n'existe aucun module de configuration de notification MAi associé à l'identifiant courant mémorisé AIDi, le contrôleur va à une étape S17a où il envoie au processeur hôte HP2 une notification se rapportant à cette exception, puis va à l'étape S12. Cette notification indique par exemple qu'aucun identifiant d'application n'est associé à une commande envoyée au processeur HP1, ou qu'aucun module de configuration de notification n'est associé à l'identifiant courant. A l'étape S7, si le programme CIP ne permet pas d'identifier la commande CAPDUj, le contrôleur va à une étape S17b où il envoie au processeur HP2 une notification se rapportant à cette exception, puis va à l'étape S12. De même, à l'étape S9, si le module courant MAi ne contient aucune règle d'analyse de commande CARj, le contrôleur va à une étape S17c où il envoie une notification se rapportant à cette exception, puis retourne à l'étape S12. A l'étape S13, si aucun identifiant courant AIDi n'a été précédemment mémorisé, ou si le contrôleur ne trouve aucun module MAi correspondant à l'identifiant courant, le contrôleur va à une étape S17d où il envoie au processeur HP2 une notification se rapportant à cette exception puis retourne à l'étape S1. Enfin, à l'étape S14, si le contrôleur ne trouve dans le module MAi aucune règle d'analyse de réponse RARj associée à la commande courante CAPDUj, ou si aucune commande courante CAPDUj n'a été précédemment mémorisée, le contrôleur va à une étape S17e où il envoie au processeur HP2 une notification se rapportant à cette exception, puis retourne à l'étape S1.

Dans une variante de réalisation de ce procédé, les étapes d'attente S1 du routage d'une donnée entrante et d'attente S12 du routage d'une donnée sortante sont exécutées simultanément afin que le contrôleur puisse notifier au processeur HP2 le routage de deux commandes successives sans que le processeur HP1 ait envoyé une réponse à la première commande (pas de donnée sortante). Il sera par ailleurs noté que si une seconde commande est reçue après une première commande, sans qu'une réponse à la première commande n'ait été émise par le processeur HP1, la réponse émise par ce dernier après réception de la seconde commande est considérée comme une réponse à la seconde commande et non à la première, en ce qui concerne son traitement pour l'envoi d'une notification au processeur HP2.

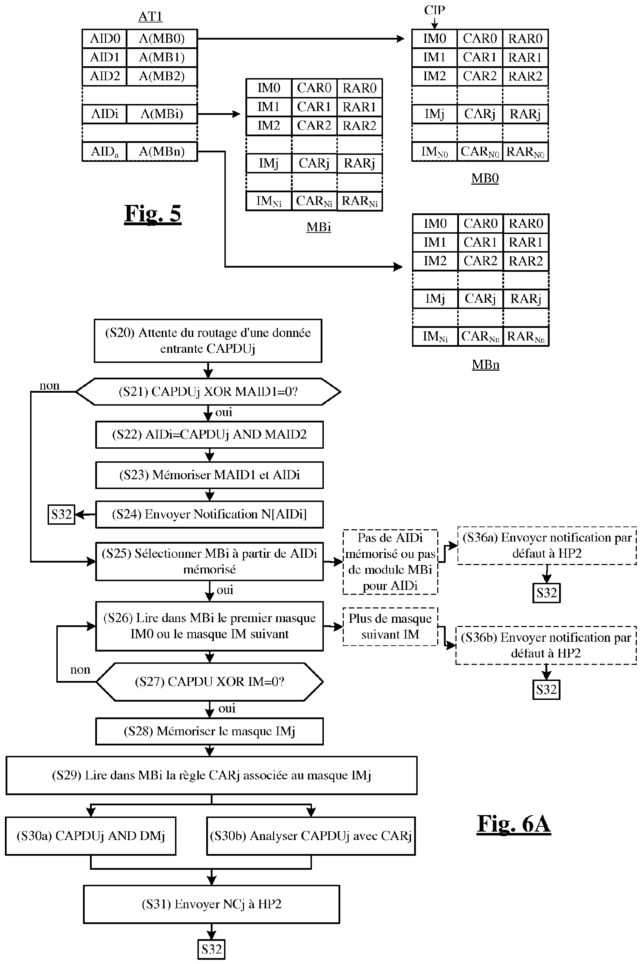

La figure 5 montre un mode de réalisation de modules de configuration de notification MBi (MB0 à MBn) qui remplacent les modules MAi précédemment décrits. Chaque module MBi comprend 3 colonnes et Ni+1 lignes (nombre de lignes pouvant varier d'un module à l'autre). Chaque ligne comprend : dans la première colonne, un masque d'identification de commande IMj, dans la seconde colonne une règle d'analyse CARj et dans la troisième colonne une règle d'analyse RARj. Les masques IMj sont des chaînes de bits prévues pour être combinées au moyen de la fonction OU Exclusif bit à bit avec des commandes CAPDU à identifier. Dans un mode de réalisation, chaque masque IMj est accompagné d'un masque de valeur destiné à être appliqué aux commandes au moyen de la fonction ET pour y supprimer des bits non significatifs ou non identifiables avec un masque (bits de valeur imprédictible), avant de combiner le résultat (commande "nettoyée") avec le masque IMj au moyen de la fonction OU Exclusif. Si le résultat de la combinaison de chaque bit d'un masque d'identification de commande IMj avec les bits correspondants d'une commande est égal à 0, la commande est réputée identifiée au moyen de ce masque et les règles d'analyse CARj, RARj sont lues dans la ligne comprenant le masque IMj. Dans un autre mode de réalisation, l'identification des commandes pourrait être assurée par une fonction à logique câblée configurable remplissant une fonction combinée de masque de valeur et de masque d'identification.

Comme montré sur figure 5, une table de notification AT1 est également prévue pour associer à chaque identifiant d'application AIDi un module MAi. La table AT1 comporte une première colonne contenant des identifiants AIDi ou des rangs i d'identifiant, et une seconde colonne contenant des valeurs A(MBi) (A(MB0), A(MB1)... A(MBₙ)) qui désignent les modules MBi associés aux identifiants AIDi. Ces valeurs peuvent être les adresses dans la mémoire MEM2 des modules MBi, ou des adresses indexées de ces modules, par exemple le rang du module dans un index d'adresses. La table de notification AT1 forme ainsi une table de correspondance ("look-up table") entre les identifiants d'application et les modules de configuration de notification correspondants.

Par ailleurs, une règle d'analyse de commande CARj peut comprendre un masque de données DMj ou un programme d'analyse de commande plus complexe qu'un masque de données. Certaines commandes connues ont en effet des champs de données de taille fixe situés à des emplacements fixes, qui peuvent être extraites au moyen d'un masque de données. Ainsi, lorsqu'une règle CARj comprend un masque de données DMj, le masque est combiné à la commande au moyen de la fonction logique ET, et le résultat de la combinaison constitue les données à notifier au processeur HP2. D'autres commandes connues ont par contre des champs de position et de longueur variables, par exemple des commandes au format TLV ("Type Length Value"). Il faut alors repérer dans de telles commandes des "étiquettes" ("tags") permettant de trouver une valeur recherchée, ce qui nécessite la prévision d'un programme d'analyse plus élaboré qu'un simple masque de données.

On suppose par contre ici que des masques de données ne peuvent être utilisés dans les règles d'analyse de réponse RARj, en raison de la structure variable des réponses RAPDU telles que prévues par la norme ISO 7816, généralement au format TLV ou LV, nécessitant un programme d'analyse.

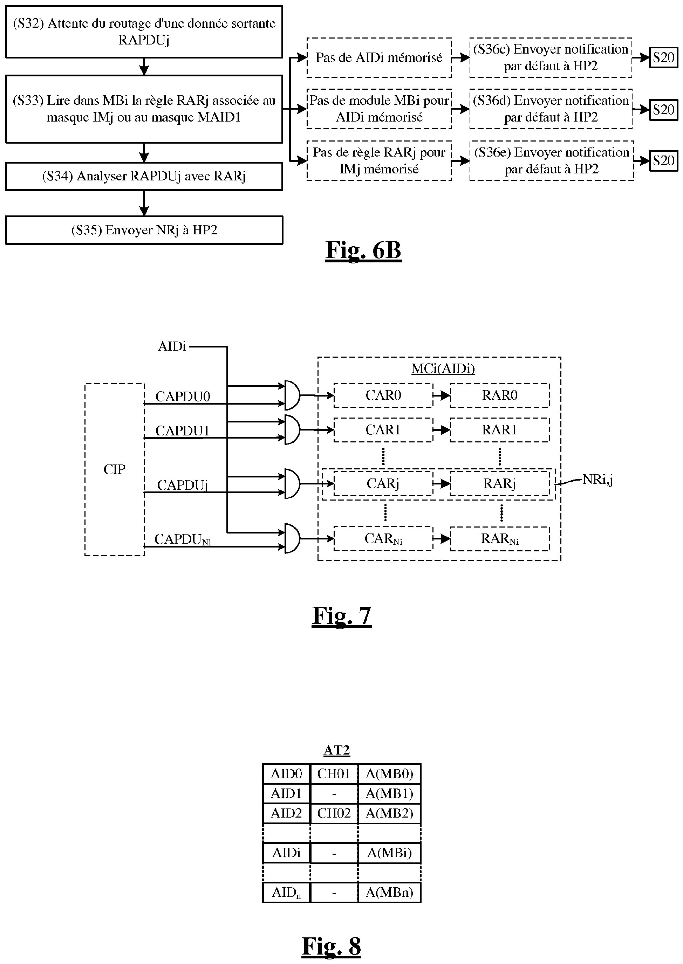

Les figures 6A, 6B représentent un mode de réalisation d'un procédé de notification utilisant les modules de configuration de notification MBi et la table de notification AT1. Le procédé comprend les étapes suivantes :
- étape S20 (figure 6A) : le contrôleur attend qu'une donnée entrante CAPDUj soit routée par le programme de routage, puis va à l'étape S21,
- étape S21 : au moyen de la fonction OU Exclusif (XOR), le contrôleur combine la commande CAPDUj avec un masque MAID1 dédié à l'identification de la commande SELECT _AID (voir exemple en Annexe 2). Si le résultat est égal à 0, la commande est une commande de sélection d'identifiant et le contrôleur va à l'étape S22, sinon le contrôleur va à l'étape S25,
- étape S22 : au moyen de la fonction logique ET ("AND"), le contrôleur combine la commande CAPDUj avec un masque MAID2 dédié à l'extraction de l'identifiant AIDi, qui forme le résultat de l'opération (voir exemple en Annexe 2),
- étape S23 : le contrôleur mémorise le masque MAID1 comme masque courant et l'identifiant AIDi en tant qu'identifiant courant, ou le rang "i" de l'identifiant,
- étape S24 : le contrôleur envoie au processeur HP2 une notification N[AIDi] contenant l'identifiant AIDi, puis va à l'étape S32,
- étape S25 : au moyen de la table de notification AT1, le contrôleur sélectionne le module de configuration de notification MBi correspondant à l'identifiant courant AIDi,
- étape S26 : le contrôleur lit dans le module MAi le premier masque d'identification de commande IM0, ou le masque IM suivant si un masque a déjà été lu au cours d'une étape S26 précédente,
- étape S27 : le contrôleur combine la commande CAPDUj avec le masque IM au moyen de la fonction OU Exclusif, éventuellement après lui avoir appliqué le masque de valeur; si le résultat est une chaîne de bits égale à 0, le contrôleur va à l'étape S28, sinon retourne à l'étape S26 pour lire le masque suivant,
- étape S28 : le contrôleur mémorise le masque IM en tant que masque courant IMj, ou mémorise seulement le rang "j" du masque,
- étape S29 : le contrôleur lit dans le module MAi la règle d'analyse CARj associée au masque IMj. Si la règle CARj comporte un masque de données DMj, le contrôleur va à l'étape S30a; si la règle comporte un programme d'analyse, le contrôleur va à l'étape S30b,
- étape S30a : le contrôleur combine le masque DMj avec la commande CAPDUj au moyen de la fonction logique ET pour extraire de la commande des données à notifier,
- étape S30b : le contrôleur analyse la commande CAPDUj au moyen de la règle CARj pour obtenir une information à notifier, qui peut inclure des données extraites de la commande,
- étape S31 : le contrôleur envoie au processeur HP2 la notification NCj contenant les données et/ou l'information, puis va à l'étape S32,
- étape S32 (figure 6B) Le contrôleur attend qu'une donnée sortante RAPDUj soit routée vers le circuit d'interface CLF. Comme indiqué précédemment, le contrôleur pourrait simultanément attendre qu'une seconde commande soit routée, étape S20, pour couvrir le cas où deux commandes simultanées sont reçues,
- étape S33 : le contrôleur lit, dans le module courant MBi, la règle RARj associée au masque courant IMj ou au masque MAID1,
- étape S34 : le contrôleur analyse la réponse RAPDUj avec la règle RARj (voir exemple en Annexe 2), et génère une notification de réponse pouvant inclure ou consister dans des données présentes dans la réponse,
- étape S35 : le contrôleur envoie une notification NRj contenant cette information au processeur HP2.

Comme précédemment, ce procédé peut comporter tout ou partie des exceptions d'exécution suivantes :
- à l'étape S25, si aucun identifiant courant AIDi n'a été précédemment mémorisé ou si aucun module MBi n'est associé à l'identifiant courant, le contrôleur va à une étape S36a où il envoie au processeur HP2 une notification se rapportant à cette exception, puis va a l'étape S32,
- à l'étape S26, si aucun des masques IM0 à IM_{Ni} du module MBi ne correspond à la commande courante CAPDUj, le contrôleur va à une étape S36b où il envoie au processeur HP2 une notification indiquant que la commande n'a pas été identifiée, puis va à l'étape S32,
- à l'étape S33, si le contrôleur ne trouve pas d'identifiant courant AIDi, il va à une étape S36c où il envoie au processeur HP2 une notification par défaut indiquant qu'une donnée non identifiable qui n'est liée à aucune application connue a été émise par le processeur HP1. Si le contrôleur ne trouve pas de module MBi associé à l'identifiant courant AIDi, il va à une étape S36d où il envoie au processeur HP2 une notification par défaut indiquant qu'une donnée non identifiable liée à l'application d'identifiant AIDi a été émise par le processeur HP1. Enfin, si le contrôleur ne trouve pas de règle d'analyse RARj associée à l'identifiant courant AIDi et au masque courant mémorisé IMj, il va à une étape S36e où il envoie au processeur HP2 une notification par défaut indiquant qu'une réponse non identifiable a été émise par le processeur HP1.

La figure 7 montre un autre mode de réalisation de modules de configuration de notification MCi selon l'invention. Le programme d'identification CIP est commun à tous les modules MCi et chaque module MCi ne comprend que des règles d'analyse CARj, RARj. Dans ce mode de réalisation, les modules MCi ne sont plus nécessaires en tant qu'éléments sélectionnables individuellement. Le programme de notification peut accéder directement à des couples NRi,j de règles d'analyse CARj, RARj à partir de l'identifiant courant AIDi et de la commande courante CAPDUj.

On a décrit dans ce qui précède des exemples de procédés de notification appliqués à un dispositif D2 relié à deux processeurs hôtes HP1, HP2, dans le cas où seul le processeur hôte HP2 reçoit des notifications concernant les données routées au processeur HP1 ou émises par celui-ci. En pratique, le dispositif peut comprendre trois processeurs hôtes ou plus, et chaque processeur est susceptible de recevoir des notifications en relation avec l'activité des autres processeurs hôtes. Un procédé de notification selon l'invention peut donc également être configuré pour générer des notifications multiples.

De même, on a supposé dans ce qui précède qu'une seule application à la fois peut être gérée par le processeur hôte HP1, de sorte que les notifications envoyées au processeur hôte HP2 sont rattachées au même identifiant d'application, appelé "identifiant courant". Dans un mode de réalisation, le processeur HP1 et le dispositif externe EDV peuvent conduire plusieurs applications à la fois. Dans ce cas, les données échangées dans le cadre d'une application sont distinguées de celles échangées dans le cadre d'une autre application au moyen de canaux logiques. Ainsi, la norme ISO 7816 prévoit la possibilité d'utiliser 4 à 20 canaux logiques en paramétrant les bits 0 et 1 du premier octet CLASS des commandes ou des réponses (dont la valeur par défaut est 0 dans le cas où une seule application à la fois est exécutée). Les spécifications "Global Platform" prévoient 4 bits supplémentaires qui définissent 16 canaux logiques en sus des 4 canaux logiques prévus par la norme ISO 7816, soit 20 canaux au total.

Dans ce cas, la mémorisation de l'identifiant de l'application n'est pas suffisante pour sélectionner les règles d'analyse applicables aux commandes et aux réponses routées par le dispositif D2. En effet l'identifiant AIDi est présent dans la commande SELECT_AID mais ne figure pas dans les commandes ou réponses suivantes. Un procédé de notification selon l'invention utilise dans ce cas une table de notification AT2 du type représenté sur la figure 8, qui comprend une colonne "canal logique" en sus de la colonne contenant les identifiants AID0 à AIDn (ou leur rang i) et de la colonne contenant les adresses A(MBi) des modules de configuration de notification MBi. La colonne "canal logique" est initialement vide et est mise à jour de façon dynamique lorsque des commandes SELECT _AID contenant des numéros de canaux logiques sont reçues et routées à un processeur hôte.

Les étapes du procédé représenté sur la figure 6A sont alors modifiées comme suit :
- à l'étape S23, lorsque l'identifiant AIDi a été extrait de la première commande SELECT _AID reçue, le canal logique correspondant est enregistré dans la table de notification AT2 en relation avec cet identifiant. En supposant que cet identifiant soit "AID0" et que le numéro de canal logique choisi par le dispositif externe soit "CH01", le canal CH01 est associé à cet identifiant dans la table de notification AT2, comme montré sur la figure 8.
- au cours d'une autre itération de l'étape S23, lorsqu'un autre identifiant est extrait d'une autre commande SELECT_AID, par exemple l'identifiant "AID2", et en supposant à titre d'exemple que le numéro de canal logique "CH02" soit trouvé dans la commande, ce numéro de canal logique CH02 est associé à l'identifiant AID2 dans la table de notification AT2.
- ensuite, lorsque l'étape S25 est exécutée, le numéro de canal logique présent dans la commande reçue est utilisé comme point d'entrée de la table de notification AT2, pour déterminer quel module, MA0 ou MA2, doit être sélectionné. Il n'est donc pas nécessaire, dans ce mode de réalisation, de mémoriser l'identifiant AIDi à l'étape S23. On mémorise plutôt l'identité (adresse en mémoire ou adresse indexée) des modules MA0, MA2 associés à chaque canal logique dans lequel une commande peut être reçue.

On a décrit dans ce qui précède des modes de réalisation du procédé de routage selon l'invention dans lequel le paramètre caractéristique retenu pour configurer les notifications est l'identifiant AIDi de l'application ou un canal logique associé à cet identifiant.

Dans d'autres modes de réalisation du procédé de routage selon l'invention, d'autres paramètres caractéristiques d'une application peuvent être utilisés pour configurer les notifications. Notamment, ces paramètres peuvent être ceux qui sont utilisés par le programme de routage RPGR pour déterminer le processeur hôte formant le point de destination des données entrantes. Dans un tel cas, il est alors possible de fusionner la table de routage RT utilisée par le programme de routage RPGR et la table de notification utilisée par le programme de notification NPGR, pour obtenir une table de routage et de notification RNT qui remplace une table de routage classique RT.

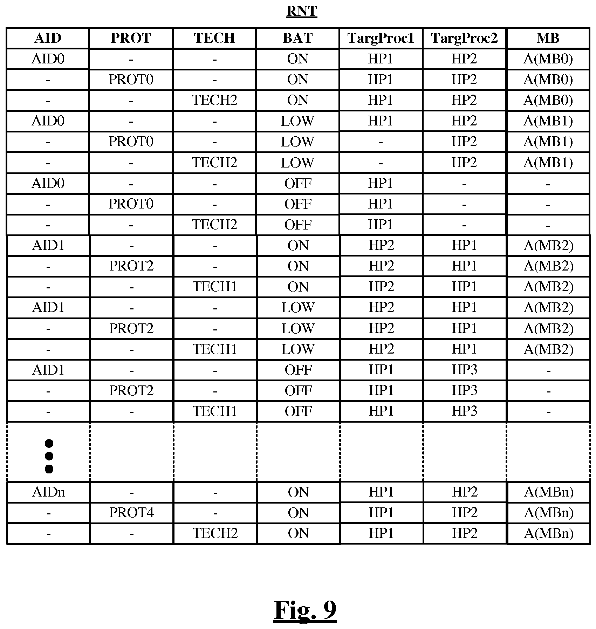

Un exemple schématique de table de routage et de notification RNT est décrit par le tableau 1 en Annexe 1 et est représenté sur la figure 9. La table RNT est ici conçue en relation avec les spécifications NCI du Forum NFC (TC DEV NCI 00058R013 NFCForum TS NCI 1.0).

Les spécifications NCI, paragraphe 5.3, préconisent, lorsqu'un dispositif NFC est dans le mode "écoute" ("Listen Mode"), un procédé de routage basé sur trois paramètres :
- l'identifiant d'application AID,
- le protocole, si l'identifiant AID ne peut être trouvé,
- la technologie, si le protocole ne peut être déterminé.

Les paramètres "protocole" et "technologie" sont définis dans les spécifications "DIGITAL 1.0" du Forum NFC. Le protocole peut être "Type1Tag", "Type2Tag", "Type3Tag", "Type4ATag", "Type4B", "ISO-DEP", "NFC-DEP". La technologie peut être "Type A", "Type B", ou "Type F", toutes utilisant la fréquence porteuse de 13,56 MHz, ou tout autre protocole dit "propriétaire", par exemple IS015. Une technologie est définie par les spécifications NCI comme un groupe de paramètres de transmission tels que la porteuse RF, le mode de communication, le débit binaire, le schéma de modulation, le codage au niveau bit, le format des trames, le protocole, etc.

La table de routage et de notification RNT comprend ainsi les paramètres caractéristiques suivants pour configurer le routage et les notifications :
- AID : l'identifiant de l'application,
- "PROT" : "protocole" au sens des spécifications NCI,
- "TECH" : "technologie" au sens des spécifications NCI.
- "BAT" : état de la batterie du dispositif D2 (non représentée sur la figure 2).

L'identifiant AID est trouvé dans la commande SELECT_AID comme décrit plus haut (étape S3 ou S22). Toutefois, la détection de l'identifiant AID est faite ici par le programme de routage RPGR à des fins de routage des données entrantes et ne nécessite donc pas d'être faite de nouveau par le programme de notification. Une simplification du programme de notification peut donc être prévue. De façon générale le programme de notification et le programme de routage peuvent être fusionnés dans le cadre d'une gestion du routage et des notifications basée sur les mêmes paramètres caractéristiques de l'application. La détection du protocole est faite au cours d'une étape dite "Discovery" prévue dans les spécifications NCI. La détection de la technologie est également faite au cours de l'étape "Discovery". Plus précisément, dans un chapitre intitulé "Activity", les spécifications prévoient les étapes suivantes : 1 - Détection de technologie; 2 - Traitement de collision (optionnel); 3 - Activation du dispositif; 4 - Echange de données; 5 - Désactivation du dispositif. La technologie est identifiée à l'étape 1 et le protocole aux étapes 1 et 3.

L'état de la batterie peut être "ON" (batterie ayant un niveau de charge satisfaisant), "LOW" (niveau en-dessous d'un seuil), ou "OFF" (batterie vide ou présentant une charge insuffisante pour faire fonctionner certains organes du dispositif). Le dispositif D2 peut présenter un mode de fonctionnement avec la batterie vide, par prélèvement d'énergie du champ magnétique émis par le dispositif externe EDV, comme décrit dans EP 1 855 229. Dans une variante, des combinaisons entre l'état de la batterie et de l'état du processeur hôte ("ON" pour activé et "OFF" pour désactivé) pourraient être prises en compte. Il conviendrait alors de prévoir une colonne supplémentaire se rapportant à l'état du processeur hôte.

La table de routage et de notification RNT comprend par ailleurs les variables suivantes, qui sont fonction des paramètres caractéristiques AID, PROT, TECH, BAT :
- TargProc1 : désigne le processeur cible pour le routage des données entrantes. On suppose ici que le dispositif D2 est relié à trois processeurs hôtes HP1, HP2, HP3, le processeur HP3 étant représenté en traits pointillés sur la figure 2 et connecté à un port P3,
- TargProc2: désigne le processeur cible pour l'envoi des notifications selon l'invention.
- A(MB): cette colonne contient les valeurs A(MB0), A(MB1)... A(MBₙ) précédemment décrites, qui désignent les modules MBi permettant de configurer les notifications adressées au processeur TargProc2.

Les spécifications NCI prévoient que l'identité du processeur cible (ici "TargProc1") est déterminée à partir de l'identifiant AID si celui-ci est connu, ou à partir du protocole si l'identifiant n'est pas connu (certaines applications NFC n'utilisent pas d'identifiant AID), ou encore à partir de la technologie si l'identifiant AID et le protocole ne peuvent être déterminés.

Le routage tel qu'illustré par la table RNT envisage donc les trois possibilités : identifiant AID connu, identifiant inconnu mais protocole connu, identifiant et protocole inconnus mais technologie connue. Les désignations "PROT0", "PROT2", "PROT4", "TECH1", "TECH2" qui figurent dans la table RNT sont schématiques et correspondent chacune à l'un des protocoles ou technologies cités plus haut, ou tout autre technologie ou protocole applicable.

Cette architecture de table de routage et de notification montre que les règles de détermination du processeur cible TargProc1 pour le routage des données entrantes peuvent être également utilisées pour déterminer le processeur auquel des notifications sont adressées, ainsi que le module de configuration de notification à utiliser pour configurer ces notifications.

Dans un mode de réalisation non représenté, la table de routage et de notification RNT comprend une colonne "TargProc3" désignant un second processeur destinataire de notifications. Elle peut alors comprendre une seconde colonne "MB" pour désigner les modules de configuration de notification utilisables pour générer les notifications adressées au processeur désigné par la colonne "TargProc3". Dans ce cas les notifications peuvent être configurées différemment en fonction du processeur auquel elles sont envoyées.

### Annexe 1

### Faisant partie intégrante de la description

**Tableau 1 (table de routage et de notification RNT)**

| AID | PROT | TECH | BAT | TargProc1 | TargProc2 | A(MB) |
|---|---|---|---|---|---|---|
| AID0 | - | - | ON | HP1 | HP2 | A(MB0) |
| - | PROT0 | - | ON | HP1 | HP2 | A(MB0) |
| - | - | TECH2 | ON | HP1 | HP2 | A(MB0) |
| AID0 | - | - | LOW | HP1 | HP2 | A(MB1) |
| - | PROT0 | - | LOW | - | HP2 | A(MB1) |
| - | - | TECH2 | LOW | - | HP2 | A(MB1) |
| AID0 | - | - | OFF | HP1 | - | - |
| - | PROT0 | - | OFF | HP1 | - | - |
| - | - | TECH2 | OFF | HP1 | - | - |
| AID1 | - | - | ON | HP2 | HP1 | A(MB2) |
| - | PROT2 | - | ON | HP2 | HP1 | A(MB2) |
| - | - | TECH1 | ON | HP2 | HP1 | A(MB2) |
| AID1 | - | - | LOW | HP2 | HP1 | A(MB2) |
| - | PROT2 | - | LOW | HP2 | HP1 | A(MB2) |
| - | - | TECH1 | LOW | HP2 | HP1 | A(MB2) |
| AID1 | - | - | OFF | HP1 | HP3 | - |
| - | PROT2 | - | OFF | HP1 | HP3 | - |
| - | - | TECH1 | OFF | HP1 | HP3 | - |
| ... | ... | ... | ... | ... | ... | ... |
| AIDn | - | - | ON | HP1 | HP2 | A(MBₙ) |
| - | PROT4 | - | ON | HP1 | HP2 | A(MBₙ) |
| - | - | TECH2 | ON | HP1 | HP2 | A(MBₙ) |

### ANNEXE 2

### Faisant partie intégrante de la description

### 1 - Exemple de masque d'identification de la commande SELECT-AID:

### 1.1 - Format de la commande SELECT_AID

| CLA | INS | P1 | P2 | Lc | Inf | Le |
|---|---|---|---|---|---|---|
| 00 | A4 | 04 | 00 | xx | AID | 00 |

| | | | | | | |
|---|---|---|---|---|---|---|
| (notation Hexadécimale) | | | | | | |

### Identification de la commande :

### 1.2 - Masque de valeur VM

| CLA | INS | P1 | P2 | Lc | AID |
|---|---|---|---|---|---|
| 0000 | 1010 | 0000 | 0000 | n/a | n/a |
| 0000 | 0100 | 0100 | 0000 | | |

| | | | | | |
|---|---|---|---|---|---|
| (notation binaire) | | | | | |

### 1.3 - Masque d'identification IM

| CLA | INS | P1 | P2 | Lc | AID |
|---|---|---|---|---|---|
| 1011 | 1111 | 1111 | 1111 | n/a | n/a |
| 0000 | 1111 | 1111 | 1101 | | |

| | | | | | |
|---|---|---|---|---|---|
| (notation binaire) | | | | | |

### 1.4 - Opération à conduire au moyen des masques

Match1 = [Commande à analyser] XOR VM (XOR = OU Exclusif) Match2 = Match1 AND IM (AND = fonction ET)
Si Match2 = 00 00 00 00... (Hexadécimal), la commande est identifiée.

### 2 - Exemple de masque d'extraction de l'identifiant AID de la commande SELECT-AID

### 2.1 - Exemple de commande

| CLA | INS | P1 | P2 | Lc | Da0 | Da1 | Da2 | Da3 | Da4 | Da5 | Da6 | Le |
|---|---|---|---|---|---|---|---|---|---|---|---|---|
| 00 | A4 | 04 | 00 | 07 | A0 | 00 | 00 | 00 | 03 | 10 | 10 | 00 |

| | | | | | | | | | | | | |
|---|---|---|---|---|---|---|---|---|---|---|---|---|
| (notation Hexadécimale) | | | | | | | | | | | | |

### 2.2 - Exemple de masque

Le paramètre Lc désigne le nombre d'octets présents dans le champ de données d'une commande APDU. Dans cet exemple, le masque est calculé avec un paramètre Lc=0.

| CLA | INS | P1 | P2 | Lc | D0 | D1 | D2 | D3 | D4 | D5 | D6 | Le |
|---|---|---|---|---|---|---|---|---|---|---|---|---|
| B0 | B1 | B2 | B3 | B4 | B5 | B6 | B7 | B8 | B9 | B10 | B11 | B12 |
| 00 | 00 | 00 | 00 | 00 | FF | FF | FF | FF | FF | FF | FF | 00 |

| | | | | | | | | | | | | |
|---|---|---|---|---|---|---|---|---|---|---|---|---|
| (notation Hexadécimale) Bx = Octet de rang x de la commande 00 = Octet ne devant pas être utilisé FF = Octet à utiliser | | | | | | | | | | | | |

### 2.3 - Extraction de l'identifiant

AID_TEMP = [Commande à analyser] ET Masque
AID = Octet B5 jusqu'à octet B(5+Lc-1)
AID = Octet B5 jusqu'à octet B11

### 3 - Exemple de masque d'identification d'une commande CAPDUj

### 3.1 Exemple de commande

Commande "READ RECORD" (commande de transaction MasterCard/PayPass). Format général de la commande :

| Champ | Valeurs des champs | Description |
|---|---|---|
| CLA | 00 | Octet de Classe (ou "Class byte") pouvant être égal à 00 pour des applications au paiement) |
| INS | B2 | Commande=READ RECORD |
| P1 | 01 | P1 ("Record number") |
| P2 | xxxx x100 | P2 ("Reference Control Parameter") |
| Le | 00 | Longueur réponse |

Le champ P2 ci-dessus est exprimé en binaire, les autres en notation hexadécimale. Les bits de valeur "x" sont des bits de valeur variable.

Une telle commande nécessite un masque différent pour chaque champ ^{..}P1 ("Record Number") car chaque commande READ RECORD avec un champ P1 appelle une réponse différente. Le nombre de masques dépend du nombre des données à extraire et à notifier au processeur hôte. Dans cet exemple les masques pourraient être les suivants :

### 3.2 Exemple de masque de valeur et d'identification

| CLA | INS | P1 | P2 | Lc | Inf | Le |
|---|---|---|---|---|---|---|
| 0000 0000 | 1011 0010 | 0000 0001 | xxxx x100 | 0000 0000 | | |

| | | | | | | |
|---|---|---|---|---|---|---|
| (notation binaire) | | | | | | |

Ce masque est à la fois un masque de valeur (bits "x" : bits à ignorer) et un masque d'identification (bits à 0 ou 1). Il peut être décomposé en un masque de valeur dans lequel les bits "x" sont égaux à 0 et toutes les autres valeurs à 1, qui est combiné avec la commande à analyser au moyen de la fonction ET, et en un masque d'identification où tous les bits "x" sont remplacés par 0, en conservant les autres bits, à combiner avec le résultat de la combinaison avec le masque de valeur au moyen de la fonction OU Exclusif.

### 4 - Exemple de programme d'analyse d'une réponse (règle d'analyse RARj)

### Exemple de réponse :

| Valeurs | Commentaire | | |
|---|---|---|---|
| 70 | Tag=Record Template | | |
| 7F | Longueur=127 | | |
| 9F 6C | Valeur | Tag=App. Version Nr. | |
| 02 | | Longueur=2 | |
| 00 01 | | Valeur | |
| 56 | | Tag=Trackl Data | |
| 3E | | Longueur=62 | |
| 42 | | Valeur | Format Code |
| 35 34 31 33 31 32 33 34 35 36 37 38 34 38 30 30 | | | PAN (=5413123456784800) |
| 5E | | | séparateur de champ |
| 53 55 50 50 4C 49 45 44 2F 4E 4F 54 | | | Nom du titulaire |
| 5E | | | séparateur de champ |
| 30 39 30 36 | | | Date d'expiration (AAMM) |
| 31 30 31 | | | Code de service |
| 33 33 30 30 30 33 33 33 30 30 30 32 32 32 32 32 30 30 30 31 31 31 31 30 | | | autres données |
| 9F 64 | | Tag=Trackl ATC Digit Nr. | |
| 01 | | Longueur=1 | |
| 03 | | Valeur | |
| 9F 62 | | Tag=Trackl BitMap for CVC3 | |
| 06 | | Longueur=6 | |
| 00 00 00 38 00 00 | | Valeur | |
| 9F 63 | | Tag=Trackl BitMap for UN & ATC | |
| 06 | | Longueur=6 | |
| 00 00 00 00 E0 E0 | | Valeur | |
| 9F 65 | | Tag=Track2 BitMap for CVC3 | |
| 02 | | Longueur=2 | |
| 00 0E | | Valeur | |
| 9F 66 | | Tag=Track2 BitMap for UN² & ATC | |
| 02 | | Longueur=2 | |
| 0E 70 | | Valeur | |
| 9F 6B | | Tag=Track2 Data | |
| 13 | | Longueur=19 | |
| 54 13 12 34 56 78 48 00 D0 90 61 01 90 00 99 00 00 00 0F | | Valeur | |
| 9F 67 | | Tag=Track2 ATC Digit Nr. | |
| 01 | | Longueur=1 | |
| 03 | | Valeur | |
| 90 00 | SW1 - SW2 | | |

La réponse est en format TLV (Type-Length-Value). Pour analyser son contenu il faut repérer des étiquettes ("tags") permettant de trouver les valeurs recherchées.

### Exemple de programme d'analyse pour la recherche du champ "Nom du titulaire" :

Le programme doit réaliser les étapes suivantes :
- Vérifier que SW1-SW2 = '9000'
- Repérer tag '70' au début de la réponse
- Repérer tag '56' dans la valeur du tag '70'

La valeur est dans le champ "Track 1 data" qui contient le nom dans un format spécifique (ici pas de format TLV mais de séparateurs de champ pour des raisons historiques liées à la carte à bande magnétique). Dans cet exemple "Track 1 data" peut être transmis tel quel au processeur hôte destinataire de la notification car une analyse pour en extraire le nom serait trop spécifique dans le cadre d'une notification, le processeur hôte recevant la notification pouvant s'en charger.

## Revendications

1. Dispositif de communication à champ proche (D2) comprenant un contrôleur (NFCC2), un premier processeur hôte (HP1) et second processeur hôte (HP2), dans lequel le contrôleur (NFCC2) est configuré pour établir un canal de communication à champ proche avec un dispositif externe (EDV), et fournir au premier processeur hôte (HP1) des données d'application (CAPDU, CAPDUj) émises par le dispositif externe (EDV),
caractérisé en que le contrôleur est également configuré pour, sur réception d'une donnée d'application (CAPDU , CAPDUj) émise par le dispositif externe:
- identifier la donnée d'application émise par le dispositif externe,
- sélectionner un programme d'analyse de donnée (MAi, MBi, CARj, RARj) en fonction du résultat de l'identification de la donnée et d'un paramètre caractéristique (AID, AIDi, PROT, TECH) d'une application dans le cadre de laquelle le dispositif externe (EDV) envoie des données au premier processeur hôte,
- analyser la donnée d'application au moyen du programme d'analyse sélectionné, et
- configurer, en utilisant le résultat de l'analyse de la donnée par le programme d'analyse sélectionné, une notification (NCj, NRj) relative à la nature ou au contenu de données d'application (CAPDU, CAPDUj) fournies au premier processeur hôte (HP1),
- fournir la notification (NCj, NRj) au second processeur hôte (HP2).

2. Dispositif selon la revendication 1, conçu pour configurer les notifications en fonction d'au moins l'un des paramètres caractéristiques suivants :
- un identifiant de l'application (AID, AIDi) dans le cadre de laquelle le dispositif externe (EDV) envoie des données au premier processeur hôte, et
- une technologie (TECH) au moyen de laquelle le canal de communication à champ proche est formé, ou
- un protocole de communication (PROT) au moyen duquel le canal de communication à champ proche est formé.

3. Dispositif selon l'une des revendications 1 et 2, configuré pour fournir au second processeur hôte (HP2) des notifications comprenant des données présentes dans des données d'application (CAPDU, CAPDUj), ou une information sur des données présentes dans les données d'application.

4. Dispositif selon l'une des revendications 1 à 3, configuré pour fournir au second processeur hôte (HP2) une notification (N[AIDi]) contenant l'identifiant (AIDi) de l'application dans le cadre de laquelle le dispositif externe (EDV) envoie des données au premier processeur hôte (HP1).

5. Dispositif selon l'une des revendications 1 à 4, configuré pour identifier la donnée d'application (CAPDUj) au moyen d'une série de masques d'identification (IM), en comparant chaque masque avec la donnée d'application jusqu'à trouver un masque correspondant à la donnée.

6. Dispositif selon la revendication 5, configuré pour analyser la donnée d'application en combinant la donnée d'application avec un masque de données (DMj) formant ou inclus dans le programme d'analyse sélectionné.

7. Dispositif selon l'une des revendications 1 à 6, dans lequel les données d'application sont des commandes CAPDU au sens de la norme ISO 7816.

8. Dispositif selon l'une des revendications 1 à 7, configuré pour :
- fournir au dispositif externe (EDV) des données d'application (RAPDUj) émises par le premier processeur hôte (HP1),
- fournir au second processeur hôte (HP2) des notifications (NRj) relatives à la nature ou au contenu des données d'application (RAPDUj) émises par le premier processeur hôte (HP1), et
- configurer les notifications en fonction dudit paramètre caractéristique (AID, AIDi, PROT, TECH).

9. Procédé de communication à champ proche (D2), au moyen d'un dispositif de communication à champ proche (D2) comprenant un contrôleur (NFCC2), un premier processeur hôte (HP1) et second processeur hôte (HP2), comprenant des étapes consistant à, au moyen du contrôleur (NFCC2):
- établir un canal de communication à champ proche entre un dispositif externe (EDV) et un dispositif de communication à champ proche (D2),
- fournir au premier processeur hôte (HP1) du dispositif de communication à champ proche, des données d'application (CAPDU, CAPDUj) émises par le dispositif externe (EDV),
caractérisé en qu'il comprend également les étapes consistant à, au moyen du contrôleur (NFCC2) :
- identifier la donnée d'application émise par le dispositif externe,
- sélectionner un programme d'analyse de donnée (MAi, MBi, CARj, RARj) en fonction du résultat de l'identification de la donnée et d'un paramètre caractéristique (AID, AIDi, PROT, TECH) d'une application dans le cadre de laquelle le dispositif externe (EDV) envoie des données au premier processeur hôte,
- analyser la donnée d'application au moyen du programme d'analyse sélectionné, et
- configurer, en utilisant le résultat de l'analyse de la donnée par le programme d'analyse sélectionné, une notification (NCj, NRj) relative à la nature ou au contenu de données d'application (CAPDU, CAPDUj) fournies au premier processeur hôte (HP1),
- fournir la notification (NCj, NRj) au second processeur hôte (HP2).

10. Procédé selon la revendication 9, dans lequel les notifications sont configurées en fonction d'au moins l'un des paramètres caractéristiques suivants :
- un identifiant de l'application (AID, AIDi) dans le cadre de laquelle le dispositif externe (EDV) envoie des données au premier processeur hôte,
- une technologie de communication sans contact (TECH) au moyen de laquelle le canal de communication à champ proche est formé, ou
- un protocole de communication sans contact (PROT) au moyen duquel le canal de communication à champ proche est formé.

11. Procédé selon l'une des revendications 9 et 10, dans lequel les notifications fournies au second processeur hôte (HP2) comprennent des données présentes dans des données d'application (CAPDU, CAPDUj), ou une information sur des données présentes dans les données d'application.

12. Procédé selon l'une des revendications 9 à 11, comprenant une étape consistant à fournir au second processeur hôte (HP2) une notification (N[AIDi]) contenant l'identifiant (AIDi) de l'application dans le cadre de laquelle le dispositif externe (EDV) envoie des données au premier processeur hôte (HP1), sur réception d'une commande de sélection d'application émise par le dispositif externe et fournie au premier processeur hôte.

13. Procédé selon l'une des revendications 9 à 12, comprenant l'utilisation d'une table de routage et de notification (RNT) désignant le premier processeur hôte (HP1) et le second processeur hôte (HP2) en fonction d'au moins un paramètre caractéristique (AID, AIDi, PROT, TECH) de l'application.

## Patentansprüche

1. Nahfeldkommunikationsvorrichtung (D2) mit einer Steuerung (NFCC2), einem ersten Hostprozessor (HP1) und einem zweiten Hostprozessor (HP2), wobei die Steuerung (NFCC2) konfiguriert ist, um einen Nahfeldkommunikationskanal mit einer externen Vorrichtung (EDV) aufzubauen, sowie um Anwendungsdaten (CAPDU, CAPDUj) bereitzustellen, die von der externen Vorrichtung (EDV) an den ersten Hostprozessor (HP1) übertragen werden, **dadurch gekennzeichnet, dass** die Steuerung ebenso konfiguriert ist, um beim Empfang von Anwendungsdaten (CAPDU, CAPDUj), die von der externen Vorrichtung übertragen werden:
- die von derexternen Vorrichtung gesendeten Anwendungsdaten zu ermitteln,
- ein Datenanalyseprogramm (MAi, MBi, CARj, RARj) basierend auf dem Ergebnis der Datenidentifikation und einem charakteristischen Parameter (AID, AIDi, PROT, TECH) einer Anwendung auszuwählen, in der die externe Vorrichtung (EDV) Daten an den ersten Hostprozessor sendet,
- die Anwendungsdaten mit Hilfe des ausgewählten Analyseprogramms zu analysieren, und
- unter Verwendung des Ergebnisses der Datenanalyse durch das ausgewählte Analyseprogramm eine Benachrichtigung (NCj, NRj) über die Art oder den Inhalt von Anwendungsdaten (CAPDU, CAPDUj) zu konfigurieren, die an den ersten Hostprozessor (HP1) übermittelt werden,
- die Benachrichtigung (NCj, NRj) an den zweiten Hostprozessor (HP2) zu übermitteln.

2. Vorrichtung nach Anspruch 1, die dazu bestimmt ist, Benachrichtigungen nach mindestens einem der folgenden charakteristischen Parameter zu konfigurieren:
- Eine Anwendungskennung (AID, AIDi), in deren Kontext die externe Vorrichtung (EDV) Daten an den ersten Hostprozessor sendet, und
- eine Technologie (TECH), mittels welcher der Nahfeld-Kommunikationskanal gebildet wird, oder
- ein Kommunikationsprotokoll (PROT), mittels welchem der Nahfeld-Kommunikationskanal gebildet wird.

3. Vorrichtung nach einem der Ansprüche 1 und 2, die konfiguriert ist, um an den zweiten Host-Prozessor (HP2) Benachrichtigungen zu senden, welche Daten beinhalten, die in Anwendungsdaten (CAPDU, CAPDUj) enthalten sind, oder Informationen über Daten, die in Anwendungsdaten enthalten sind.

4. Vorrichtung nach einem der Ansprüche 1 bis 3, die konfiguriert ist, um an den zweiten Hostprozessor (HP2) eine Benachrichtigung (N[AIDi]) mit der Kennung (AIDi) der Anwendung zu übermitteln, bei der die externe Vorrichtung (EDV) Daten an den ersten Hostprozessor (HP1) sendet.

5. Vorrichtung nach einem der Ansprüche 1 bis 4, die konfiguriert ist, um die Anwendungsdaten (CAPDUj) mittels einer Reihe von Identifikationsmasken (IM) zu ermitteln, wobei jede Maske mit den Anwendungsdaten verglichen wird, bis eine Maske gefunden wird, die den Daten entspricht.

6. Vorrichtung nach Anspruch 5, die konfiguriert ist, um die Anwendungsdaten durch Kombinieren der Anwendungsdaten mit einer Datenmaske (DMj) zu analysieren, die das ausgewählte Analyseprogramm bildet oder darin enthalten ist.

7. Vorrichtung nach einem der Ansprüche 1 bis 6, wobei die Anwendungsdaten CAPDU-Befehle im Sinne des Standards ISO 7816 sind.

8. Vorrichtung nach einem der Ansprüche 1 bis 7, die konfiguriert ist, um
- die externe Vorrichtung (EDV) mit Anwendungsdaten (RAPDUj) vom ersten Hostprozessor (HP1) zu versorgen,
- an den zweiten Hostprozessor (HP2) Benachrichtigungen (NRj) bezüglich der Art oder des Inhalts von Anwendungsdaten (RAPDUj), die von dem ersten Hostprozessor (HP1) ausgegeben werden, zu übermitteln, und
- Benachrichtigungen gemäß dem charakteristischen Parameter (AID, AIDi, PROT, TECH) zu konfigurieren.

9. Verfahren zur Nahfeldkommunikation (D2) mittels einer Nahfeldkommunikationsvorrichtung (D2), die eine Steuerung (NFCC2), einen ersten Hostprozessor (HP1) und einen zweiten Hostprozessor (HP2) umfasst, die die Schritte umfasst, die mittels der Steuerung (NFCC2) aus Folgendem bestehen:
- Einrichten eines Nahfeldkommunikationskanals zwischen einer externen Vorrichtung (EDV) und einer Nahfeldkommunikationsvorrichtung (D2),
Versorgen des ersten Hostprozessors (HP1) des Nahfeldkommunikationsgeräts mit Anwendungsdaten (CAPDU, CAPDUj), die von dem externen Gerät (EDV) übertragen werden, **dadurch gekennzeichnet, dass** es auch die Schritte umfasst, mittels der Steuerung (NFCC2):
- die von derexternen Vorrichtung gesendeten Anwendungsdaten zu ermitteln,
- ein Datenanalyseprogramm (MAi, MBi, CARj, RARj) auszuwählen, basierend auf dem Ergebnis der Datenidentifikation und einem charakteristischen Parameter (AID, AIDi, PROT, TECH) einer Anwendung, in der die externe Vorrichtung (EDV) Daten an den ersten Hostprozessor sendet,
- die Anwendungsdaten mit Hilfe des ausgewählten Analyseprogramms zu analysieren, und
- unter Verwendung des Ergebnisses der Datenanalyse durch das ausgewählte Analyseprogramm eine Benachrichtigung (NCj, NRj) über die Art oder den Inhalt von Anwendungsdaten (CAPDU, CAPDUj) zu konfigurieren, die an den ersten Hostprozessor (HP1) übermittelt werden,
- die Benachrichtigung (NCj, NRj) an den zweiten Hostprozessor (HP2) zu übermitteln.

10. Verfahren nach Anspruch 9, wobei die Benachrichtigungen gemäß mindestens einem der folgenden charakteristischen Parameter konfiguriert sind:
- eine Anwendungskennung (AID, AIDi), mit der die externe Vorrichtung (EDV) Daten an den ersten Hostprozessor sendet,
- eine kontaktlose Kommunikationstechnologie (TECH), mit der der Nahfeldkommunikationskanal gebildet wird, oder
- ein kontaktloses Kommunikationsprotokoll (PROT), mit dem der Nahfeldkommunikationskanal gebildet wird.

11. Verfahren nach einem der Ansprüche 9 und 10, wobei die an den zweiten Hostprozessor (HP2) übermittelten Benachrichtigungen Daten, die in Anwendungsdaten (CAPDU, CAPDUj) vorhanden sind, oder eine Information über in den Anwendungsdaten vorhandene Daten enthalten.

12. Verfahren nach einem der Ansprüche 9 bis 11, umfassend einen Arbeitsschritt zum Übermitteln einer Benachrichtigung (N[AIDi]) an den zweiten Hostprozessor (HP2), die die Kennung (AIDi) der Anwendung enthält, bei der die externe Vorrichtung (EDV) Daten an den ersten Hostprozessor (HP1) sendet, nachdem ein Anwendungsauswahlbefehl empfangen wurde, der von der externen Vorrichtung ausgegeben und an den ersten Host-Prozessor übermittelt wurde.

13. Verfahren nach einem der Ansprüche 9 bis 12, umfassend die Verwendung einer Routing- und Benachrichtigungstabelle (RNT), die den ersten Hostprozessor (HP1) und den zweiten Hostprozessor (HP2) gemäß mindestens einem charakteristischen Parameter (AID, AIDi, PROT, TECH) der Anwendung bezeichnet.

## Claims

1. Near-field communication device (D2) comprising a controller (NFCC2), a first host processor (HP1) and a second host processor (HP2), wherein the controller (NFCC2) is configured to establish a near-field communication channel with an external device (EDV) and to supply the first host processor (HP1) with application data (CAPDU, CAPDUj) transmitted by the external device (EDV), **characterized in that** the controller, upon receiving a piece of application data (CAPDU, CAPDUj) transmitted by the external device, is also configured to:
- identify the piece of application data transmitted by the external device,
- select a data analysis program (MAi, MBi, CARj, RARj) according to the result of the identification of the piece of data and a characteristic parameter (AID, AIDi, PROT, TECH) of an application in the context of which the external device (EDV) sends data to the first host processor,
- analyze the piece of application data by means of the selected analysis program, and
- configure, by using the result of the data analysis by the selected analysis program, a notification (NCj, NRj) relating to the nature or content of application data (CAPDU, CAPDUj) that is supplied to the first host processor (HP1),
- supply the notification (NCj, NRj) to the second host processor (HP2).

2. Device according to claim 1, intended for configuring notifications according to at least one of the following characteristic parameters:
- an identifier (AID, AIDi) of the application in the context of which the external device (EDV) sends data to the first host processor, and
- a piece of technology (TECH) by means of which the near-field communication channel is formed, or
- a communication protocol (PROT) by means of which the near-field communication channel is formed.

3. Device according to either claim 1 or claim 2, configured to supply the second host processor (HP2) with notifications comprising data present in application data (CAPDU, CAPDUj), or a piece of information on data present in the application data.

4. Device according to any of claims 1 to 3, configured to supply the second host processor (HP2) with a notification (N[AIDi]) containing the identifier (AIDi) of the application in the context of which the external device (EDV) sends data to the first host processor (HP1).

5. Device according to any of claims 1 to 4, configured to identify the piece of application data (CAPDUj) by means of a series of identification masks (IM), by comparing each mask with the piece of application data until a mask corresponding to the piece of data is found.

6. Device according to claim 5, configured to analyze the piece of application data by combining the piece of application data with a data mask (DMj) forming or included in the selected analysis program.

7. Device according to any of claims 1 to 6, wherein the application data are CAPDU commands within the meaning of the ISO 7816 standard.

8. Device according to any of claims 1 to 7, configured for:
- supplying the external device (EDV) with application data (RAPDUj) transmitted by the first host processor (HP1),
- supplying the second host processor (HP2) with notifications (NRj) relating to the nature or content of the application data (RAPDUj) transmitted by the first host processor (HP1), and
- configuring the notifications according to said characteristic parameter (AID, AIDi, PROT, TECH).

9. Method for near-field communication (D2), by means of a near-field communication device (D2) comprising a controller (NFCC2), a first host processor (HP1) and a second host processor (HP2), comprising the following steps, by means of the controller (NFCC2):
- establishing a near-field communication channel between an external device (EDV) and a near-field communication device (D2),
- supplying the first host processor (HP1) of the near-field communication device with application data (CAPDU, CAPDUj) transmitted by the external device (EDV), **characterized in that** it also comprises the following steps, by means of the controller (NFCC2):
- identifying the piece of application data transmitted by the external device,
- selecting a data analysis program (MAi, MBi, CARj, RARj) according to the result of the identification of the piece of data and a characteristic parameter (AID, AIDi, PROT, TECH) of an application in the context of which the external device (EDV) sends data to the first host processor,
- analyzing the piece of application data by means of the selected analysis program, and
- configure, by using the result of the data analysis by the selected analysis program, a notification (NCj, NRj) relating to the nature or content of application data (CAPDU, CAPDUj) that is supplied to the first host processor (HP1),
- supplying the notification (NCj, NRj) to the second host processor (HP2).

10. Method according to claim 9, wherein the notifications are configured according to at least one of the following characteristic parameters:
- an identifier (AID, AIDi) of the application in the context of which the external device (EDV) sends data to the first host processor,
- a piece of contactless communication technology (TECH) by means of which the near-field communication channel is formed, or
- a contactless communication protocol (PROT) by means of which the near-field communication channel is formed.

11. Method according to either claim 9 or claim 10, wherein the notifications supplied to the second host processor (HP2) comprise data present in application data (CAPDU, CAPDUj), or a piece of information on data present in the application data.

12. Method according to any of claims 9 to 11, comprising a step of supplying the second host processor (HP2) with a notification (N[AIDi]) containing the identifier (AIDi) of the application in the context of which the external device (EDV) sends data to the first host processor (HP1) upon receiving a command for selecting the application transmitted by the external device and supplied to the first host processor.

13. Method according to any of claims 9 to 12, which method involves the use of a routing and notification table (RNT) to designate the first host processor (HP1) and the second host processor (HP2) according to at least one characteristic parameter (AID, AIDi, PROT, TECH) of the application.
